# EUROPEAN PATENT APPLICATION

(11) **EP 1 322 099 A1**
(43) Date of publication of application: **25.06.2003**
(21) Application number: 01965622.2
(22) Date of filing: 13.09.2001
(51) Int. Cl.: H04M 1/274, H04M 3/44, H04Q 3/58

(54) **EXCHANGE SYSTEM, COMMUNICATION TERMINAL THEREFOR, AND EXCHANGE COMMUNICATION DEVICE**

(30) Priority: 14.09.2000 JP 2000279293
(71) Applicant: MATSUSHITA ELECTRIC INDUSTRIAL CO., LTD, Kadoma-shi, Osaka 571-0000 (JP)
(72) Inventor: TSUKAHARA, Daiho, Hodogaya-ku, Yokohama-shi, Kanagawa 240- (JP)
(74) Representative: Casalonga, Axel
(86) International application number: JP0107956
(87) International publication number: WO02023871

(57) **Abstract**

The present invention is designed such that in a communication apparatus under a control of a switching communication apparatus, a telephone transmission can be done by using a telephone directory data within the switching communication apparatus which is not registered in a telephone directory within the communication apparatus. When, a signal indicative of a usage of a telephone directory data is inputted to a terminal controller 1a from a telephone directory process recognizer 1c, the terminal controller 1a transmits a telephone directory data stored in an in-terminal telephone directory memory 1b, to a switching communication apparatus 2. Then, a telephone directory comparator 2d compares a telephone directory data received from a communication terminal 1 with a telephone directory data stored in an in-switching-communication-apparatus telephone directory memory 2d, and stores a telephone directory data, in which the telephone directory data of the communication terminal 1 and the telephone directory data of the switching communication apparatus 2 do not overlap with each other, in a transmission telephone directory memory 2c. Moreover, a central controller 2a transmits the telephone directory data stored in the transmission telephone directory memory 2c to the communication terminal 1. Consequently, the communication terminal 1 can carry out the telephone transmission by effectively using the telephone directory data within the switching communication apparatus 2.

## Description

### TECHNICAL FIELD

The present invention relates to a supporting technique for a telephone directory usage of a communication terminal under a control of a communication apparatus (referred to as a switching communication apparatus) having a switching function, and more particularly relates to a private electronic switching system in which not only a telephone directory data recorded in a communication terminal but also a telephone directory data recorded in a switching communication apparatus can be used when the communication terminal uses a telephone directory.

### BACKGROUND ART

Conventionally, a communication terminal which is configured as a private electronic switching system and under a control of a switching communication apparatus, when carrying out a call out by using a telephone directory data registered in the switching communication apparatus, carries out the call out after registering, in a memory of the communication terminal, the telephone directory data within the switching communication apparatus. For example, Japanese Laid Open Patent Application (JP-A-Heisei, 11-191802) discloses a technique in which a communication terminal, if a telephone number obtained at an incoming time is not retrieved from a memory, newly stores the telephone number in the memory to thereby expand a telephone directory function. According to such a technique, each time a new telephone number is newly inputted to a portable terminal, the telephone directory data is expanded. Thus, it is possible to improve the convenience of the portable terminal.

However, in the above-mentioned conventional private electronic switching system, the relation of the memory capacity of the communication terminal causes the number of the telephone directory registrations in the communication terminal to be limited. Thus, if the registrations have been done up to the limited number of the telephone directory registrations, the communication terminal can not register the telephone directory data of the switching communication apparatus. Also, even in the case that the registrations are not done up to the limited number of the telephone directory registrations, there are the inconvenience that the telephone directory data of the switching communication apparatus must be again registered in the communication terminal, and other inconveniences.

### DISCLOSURE OF THE INVENTION

The present invention is accomplished in view of the above mentioned circumstances. Therefore, as an object of the present invention, it is designed such that when the communication terminal uses a telephone directory data, since a telephone directory data of the switching communication apparatus is transmitted to the communication terminal, the communication terminal can use both of the telephone directory data registered in it and the telephone directory data registered in the switching communication apparatus.

In order to solve the above-mentioned problems, a private electronic switching system of the present invention is a private electronic switching system, which is provided with a switching communication apparatus and a communication terminal under a control of the switching communication apparatus, for supporting a telephone directory retrieval of the communication terminal, wherein the communication terminal includes: a telephone directory process recognizer for recognizing a signal indicative of a usage of its telephone directory data; an in-terminal telephone directory memory for storing a telephone directory data stored in it; and a terminal controller for controlling the telephone directory process recognizer and carrying out a transmission reception control of the telephone directory data to and from the switching communication apparatus. Also, the switching communication apparatus includes an in-switching-communication-apparatus telephone directory memory for storing the telephone directory data stored in it and a central controller for carrying out the transmission reception control of the telephone directory data to and from the communication terminal. This is characterized in that due to the above-mentioned configuration, the transmission of the telephone directory data within the switching communication apparatus to the communication terminal enables the communication terminal to use the telephone directory data registered in the switching communication apparatus.

That is, according to the private electronic switching system of the present invention and the communication terminal and the switching communication apparatus constituting the same, when a transmission telephone is tried from the communication terminal, if the telephone directory process recognizer recognizes an action to use a telephone directory, the terminal controller obtains the telephone directory data registered in the in-terminal telephone directory memory and transmits to the switching communication apparatus. Then, the central controller of the switching communication apparatus transmits to the communication terminal the telephone directory data registered in the in-switching-communication-apparatus telephone directory memory. In this way, the transmission of the telephone directory data within the switching communication apparatus to the communication terminal enables the communication terminal to use the telephone directory data registered by it and the telephone directory data registered in the switching communication apparatus.

Also, the private electronic switching system of the present invention is the private electronic switching system, which is provided with the switching communication apparatus and the communication terminal under the control of the switching communication apparatus, for supporting the telephone directory retrieval of the communication terminal, wherein the communication terminal includes: the telephone directory process recognizer for recognizing the signal indicative of the usage of its telephone directory data; the in-terminal telephone directory memory for storing the telephone directory data stored in it; and the terminal controller for controlling the telephone directory process recognizer and carrying out the transmission reception control of the telephone directory data to and from the switching communication apparatus. Also, the switching communication apparatus includes: the in-switching-communication-apparatus telephone directory memory for storing the telephone directory data stored in it; a telephone directory comparator for comparing the telephone directory data stored in the in-terminal telephone directory memory with the telephone directory data stored in the in-switching-communication-apparatus telephone directory memory; a transmission telephone directory memory for storing the telephone directory data which is judged to be absent in the in-terminal telephone directory memory and judged to be present in the in-switching-communication-apparatus telephone directory memory from the compared result by the telephone directory comparator; and the central controller for carrying out the transmission reception control of the telephone directory data to and from the communication terminal. This is characterized in that due to the above-mentioned configuration, since the communication terminal receives the telephone directory data stored in the transmission telephone directory memory, the communication terminal can use, in addition to the telephone directory data registered in it, the telephone directory data registered in the switching communication apparatus.

That is, according to the private electronic switching system of the present invention and the communication terminal and the switching communication apparatus constituting the same, when the transmission telephone is tried from the communication terminal, if the telephone directory process recognizer recognizes the action to use the telephone directory, the terminal controller obtains the telephone directory data registered in the in-terminal telephone directory memory and transmits to the switching communication apparatus. Then, the telephone directory comparator of the switching communication apparatus compares the telephone directory data received from the communication terminal with the telephone directory data of the in-switching-communication-apparatus telephone directory memory storing the telephone directory data within the switching communication apparatus, and stores in the transmission telephone directory memory the telephone directory data registered only in the switching communication apparatus. Moreover, the central controller transmits the telephone directory data of the transmission telephone directory memory to the communication terminal. Consequently, the communication terminal can avoid the duplex usage of the telephone directory data within the communication terminal and the telephone directory data within the switching communication apparatus to thereby use the telephone directory data of the switching communication apparatus. Thus, the communication terminal can effectively use the necessary telephone directory data without receiving the limit on the number of the telephone directory registrations caused by the memory capacity.

Also, the private electronic switching system of the present invention is the private electronic switching system, which is provided with the switching communication apparatus and the communication terminal under the control of the switching communication apparatus, for supporting the telephone directory retrieval of the communication terminal, wherein the communication terminal includes: the telephone directory process recognizer for recognizing the signal indicative of the usage of its telephone directory data; the in-terminal telephone directory memory for storing the telephone directory data stored in it; an order controller for carrying out the control so that the telephone directory data stored in the in-terminal telephone directory memory and the telephone directory data received from the transmission telephone directory memory are arrayed at an order based on a certain rule; and the terminal controller for controlling the telephone directory process recognizer and carrying out the transmission reception control of the telephone directory data to and from the switching communication apparatus. Also, the switching communication apparatus includes: the in-switching-communication-apparatus telephone directory memory for storing the telephone directory data stored in it; the telephone directory comparator for comparing the telephone directory data in the in-terminal telephone directory memory with the telephone directory data in the in-switching-communication-apparatus telephone directory memory; the transmission telephone directory memory for storing the telephone directory data which is judged to be absent in the in-terminal telephone directory memory and judged to be present in the in-switching-communication-apparatus telephone directory memory from the compared result by the telephone directory comparator; and the central controller for carrying out the transmission reception control of the telephone directory data to and from the communication terminal. This is characterized in that since the communication terminal receives the telephone directory data stored in the transmission telephone directory memory, the communication terminal can use the telephone directory data registered in it and the telephone directory data registered in the switching communication apparatus, at an array order such as a kana order or an alphabet order, in accordance with the order controlled by the order controller.

That is, according to the private electronic switching system of the present invention and the communication terminal and the switching communication apparatus constituting the same, when the transmission telephone is tried from the communication terminal, if the telephone directory process recognizer recognizes the action to use the telephone directory, the terminal controller obtains the telephone directory data registered in the in-terminal telephone directory memory and transmits to the switching communication apparatus. Then, the telephone directory comparator of the switching communication apparatus compares the telephone directory data received from the communication terminal with the telephone directory data of the in-switching-communication-apparatus telephone directory memory storing the telephone directory data within the switching communication apparatus, and stores in the transmission telephone directory memory the telephone directory data registered only in the switching communication apparatus. Moreover, the central controller transmits the telephone directory data of the transmission telephone directory memory to the communication terminal. Then, the order controller of the communication terminal controls the order of the received telephone directory data and the telephone directory data within the communication terminal as a predetermined array, and carries out the process so that they can be used as the telephone directory data in the communication terminal. Consequently, the telephone directory data registered in the communication terminal and the telephone directory data within the switching communication apparatus, which does not overlap with that telephone directory data, are controlled so as to be arrayed in the kana order or the alphabet order, and the communication terminal can use the telephone directory data arrayed at that order. Therefore, the communication terminal can use the telephone directory data registered by it and the telephone directory data of the switching communication apparatus, in the extremely convenient manner.

### BRIEF DESCRIPTION OF THE DRAWINGS

The above-mentioned objects and features of the present invention will become more fully apparent from an embodiment of the present invention described in conjunction with the following drawings.

Fig. 1 is a block diagram showing a configuration of a private electronic switching system in an embodiment of the present invention.

Fig. 2 is a flowchart describing an operation in the private electronic switching system of Fig. 1.

### BEST MODE FOR CARRYING OUT THE INVENTION

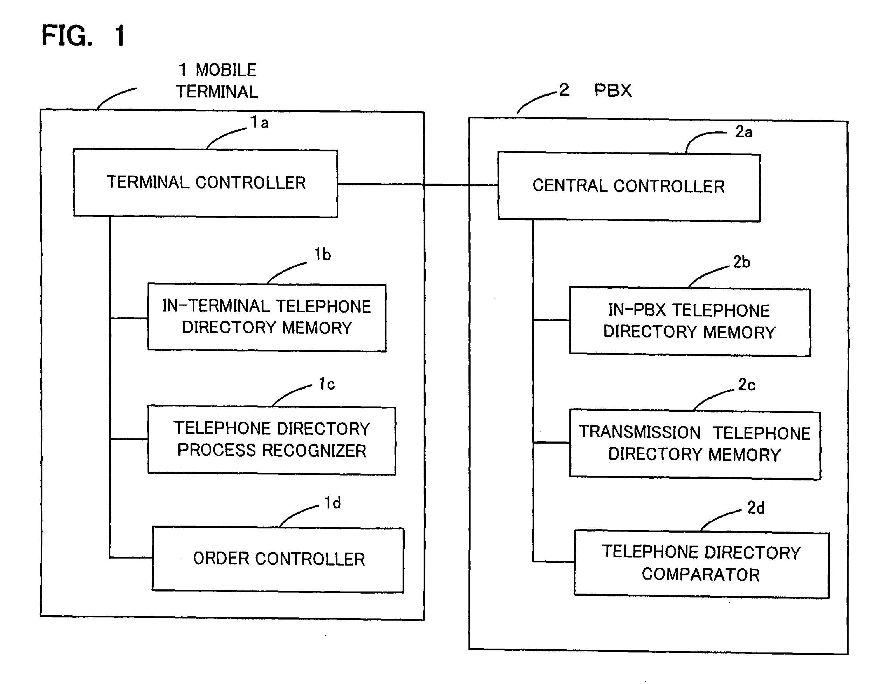

A private electronic switching system of the present invention and a communication terminal and a switching communication apparatus constituting the same will be described below with reference to the drawings. Fig. 1 is a block diagram showing the configuration of the private electronic switching system in the embodiment of the present invention. In Fig. 1, the private electronic switching system of the present invention is provided with a communication terminal 1 and a switching communication apparatus 2. As the communication terminal 1, any of a fixed terminal and a mobile terminal can be used.

The communication terminal 1 is provided with: an in-terminal telephone directory memory 1b for storing a telephone directory data registered in the communication terminal 1; a telephone directory process recognizer 1c for receiving a signal indicative of a usage of the telephone directory data by recognizing an action to use the telephone directory data; an order controller 1d for carrying out an order control between the telephone directory data in the in-terminal telephone directory memory 1b and a telephone directory data received from a transmission telephone directory memory 2c of the switching communication apparatus 2; and a terminal controller 1a for controlling all the devices within the communication terminal 1 and also controlling the telephone directory process recognizer 1c and then carrying out a transmission reception control of the telephone directory data between the communication terminal 1 and the switching communication apparatus 2.

Also, the switching communication apparatus 2 is provided with: an in-switching-communication-apparatus telephone directory memory 2b for storing the telephone directory data registered in the switching communication apparatus 2; a telephone directory comparator 2d for comparing the telephone directory data received from the in-terminal telephone directory memory 1b with the telephone directory data stored in the in-switching-communication-apparatus telephone directory memory 2b and then judging whether or not both of the telephone directory data overlap with each other; the transmission telephone directory memory 2c for storing the telephone directory data which is judged to be absent in the in-terminal telephone directory memory 1b and judged to be present in the in-switching-communication-apparatus telephone directory memory 2b from the compared result by the telephone directory comparator 2d; and a central controller 2a for controlling all the devices within the switching communication apparatus 2 and also carrying out the transmission reception control of the telephone directory data between the switching communication apparatus 2 and the communication terminal 1. By the way, as the switching communication apparatus 2, a PBX (Private Branch Exchange) and a CTI (Computer Telephony Integration) server can be used.

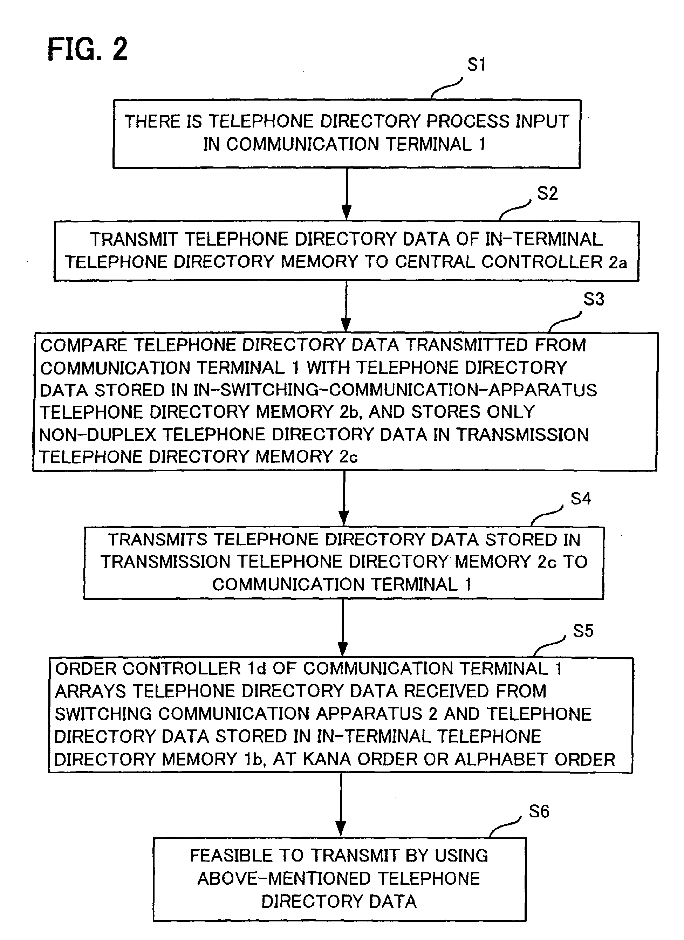

The operation in the private electronic switching system of the present invention will be described below with reference to the flowchart of Fig. 2. At first, when the communication terminal 1 carries out a process for treating a telephone directory, a signal indicating that a telephone directory data is used in the telephone directory process recognizer 1c is inputted to the terminal controller 1a (Step S1). Then, the terminal controller 1a transmits the telephone directory data stored in the in-terminal telephone directory memory 1b to the central controller 2a of the switching communication apparatus 2 (Step S2).

The central controller 2a, when the telephone directory comparator 2d compares the telephone directory data received from the communication terminal 1 with the telephone directory data that is registered in the switching communication apparatus 2 and stored in the in-switching-communication-apparatus telephone directory memory 2b, stores only the telephone directory data, in which the telephone directory data of the communication terminal 1 and the telephone directory data of the switching communication apparatus 2 do not overlap with each other, in the transmission telephone directory memory 2c (Step S3). Moreover, the central controller 2a transmits the telephone directory data stored in the transmission telephone directory memory 2c of the switching communication apparatus 2 to the communication terminal 1 (Step S4).

Then, the order controller 1d of the communication terminal 1 carries out the control for arraying the telephone directory data received from the switching communication apparatus 2 and the telephone directory data stored in the in-terminal telephone directory memory 1b, in a kana order or an alphabet order (Step S5). Due to this, the communication terminal 1 can use not only its telephone directory data but also the telephone directory data of the switching communication apparatus 2 and can commonly use both of the telephone directory data in the kana order or the alphabet order (Step S6). Thus, it is possible to attain the communication terminal 1 that is extremely convenient without receiving the limit on the memory capacity.

The above-mentioned embodiment is one example to explain the present invention. The present invention is not limited to the above-mentioned embodiment. Various variations are possible within the scope of the present invention. For example, the private electronic switching system in the above-mentioned embodiment is described by exemplifying the case that the communication terminal and the switching communication apparatus have the perfect configurations shown in Fig. 1. However, even if they do not have the perfect configurations, it is possible to attain the private electronic switching system of the present invention.

That is, the private electronic switching system of the present invention can be attained even in the configuration in which the communication terminal 1 has the telephone directory process recognizer 1c, the in-terminal telephone directory memory 1b and the terminal controller 1a without having the order controller 1d and the switching communication apparatus 2 has only the central controller 2a and the in-switching-communication-apparatus telephone directory memory 2b without having the transmission telephone directory memory 2c and the telephone directory comparator 2d. Due to such configuration, the transmission of the telephone directory data within the switching communication apparatus 2 to the communication terminal 1 enables the communication terminal 1 to use the telephone directory data registered in the switching communication apparatus 2.

Thus, according to the private electronic switching system having the above-mentioned configuration, when a transmission telephone is tried by the communication terminal 1, if the telephone directory process recognizer 1c recognizes an action to use a telephone directory data, the terminal controller 1a obtains the telephone directory data registered in the in-terminal telephone directory memory 1b, and transmits to the switching communication apparatus 2. Then, the central controller 2a of the switching communication apparatus 2 transmits the telephone directory data registered in the in-switching-communication-apparatus telephone directory memory 2b to the communication terminal 1. In this way, the transmission of the telephone directory data within the switching communication apparatus 2 to the communication terminal 1 enables the communication terminal 1 to use not only the telephone directory data registered by it but also the telephone directory data registered in the switching communication apparatus 2.

Also, as another configuration of the private electronic switching system, even in the configuration in which the communication terminal 1 has the telephone directory process recognizer 1c, the in-terminal telephone directory memory 1b and the terminal controller 1a without having the order controller 1d and the switching communication apparatus 2 has the full configuration, namely, it has the in-switching-communication-apparatus telephone directory memory 2b, the transmission telephone directory memory 2c, the telephone directory comparator 2d and the central controller 2a, the private electronic switching system of the present invention can be attained.

Due to the above-mentioned configuration, since the communication terminal 1 receives the telephone directory data stored in the transmission telephone directory memory 2c, the communication terminal 1 can use, in addition to the telephone directory data registered in it, the telephone directory data registered in the switching communication apparatus 2.

That is, according to the private electronic switching system of the present invention, when the transmission telephone is tried by the communication terminal 1, if the telephone directory process recognizer 1c recognizes the action to use the telephone directory, the terminal controller 1a obtains the telephone directory data registered in the in-terminal telephone directory memory 1b and transmits to the switching communication apparatus 2. Then, the telephone directory comparator 2d of the switching communication apparatus 2 compares the telephone directory data received from the communication terminal 1 with the telephone directory data of the in-switching-communication-apparatus telephone directory memory 2b storing the telephone directory data within the switching communication apparatus 2, and stores in the transmission telephone directory memory 2c the telephone directory data stored only within the switching communication apparatus 2. Moreover, the central controller 2a transmits the telephone directory data of the transmission telephone directory memory 2c to the communication terminal 1. Consequently, the communication terminal 1 can avoid the duplex usage of the telephone directory data within the communication terminal 1 and the telephone directory data within the switching communication apparatus 2 to thereby use the telephone directory data of the switching communication apparatus 2. Thus, the communication terminal 1 can effectively use the necessary telephone directory data without receiving the limit on the number of the telephone directory registrations caused by the memory capacity.

### Industrial Applicability

As mentioned above, according to the private electronic switching system of the present invention, the communication terminal can use the telephone directory data registered in the switching communication apparatus, even in the case of the excess over the limited capacity of the telephone directory data in the communication terminal itself. Also, the communication terminal can use even the telephone directory data that is not registered in its memory, by arbitrarily obtaining from the telephone directory data of the switching communication apparatus. Thus, a large amount of telephone directory data can be used without any limit on the capacity of the telephone directory memory of the communication terminal. Hence, it is possible to establish the private electronic switching system that can attain the communication terminal which is extremely convenient. Also, it is not necessary to increase the memory capacity in order to store a large amount of telephone directory data. Therefore, it is possible to achieve the communication terminal in which a large amount of telephone directory data can be used at a low cost.

### DESCRIPTION UNDER Art. 19(1)

Claim 1 has been made clear such that there exists order control means which arranges telephone directory data of two kinds in a predetermined order, by adding the contents of claim 2 before amendment to claim 1 before amendment.

None of the cited references discloses such a feature.

Claims 2, 3 and 4 have been cancelled.

Claim 5 has been made clear such that there exists order control means which arranges telephone directory data of two kinds in a predetermined order, by adding the contents of claim 7 before amendment to claim 5 before amendment.

None of the cited references discloses such a feature.

Claim 6 has been made clear such that there exists order control means which arranges telephone directory data of two kinds in a predetermined order, by amending the same so as to include features of claims 5, 6 and 7 before amendment.

None of the cited references discloses such a feature.

Claims 7 and 8 have been cancelled.

Dependency of claim 9 has been amended to depend from only claim 5 after amendment.

Dependency of claim 10 has been amended to depend from only claim 5 after amendment.

## Claims

1. A communication terminal comprising: an in-terminal telephone directory memory for storing a telephone directory data; and a terminal controller for controlling said in-terminal telephone directory memory and also carrying out a transmission reception control of a telephone directory data to and from said switching apparatus for carrying a transmission reception of a telephone directory data stored in an in-switching-communication-apparatus telephone directory memory, wherein a reception of the telephone directory data stored in said in-switching-communication-apparatus telephone directory memory enables the usage of the telephone directory data stored in said in-terminal telephone directory memory and the telephone directory data stored in said in-switching-communication-apparatus telephone directory memory.

2. The communication terminal according to claim 1, comprising an order controller for arraying the telephone directory data received from said switching communication apparatus and the telephone directory data stored in said in-terminal telephone directory memory at a predetermined order.

3. A switching communication apparatus comprising: an in-switching-communication-apparatus telephone directory memory for storing a telephone directory data; and a central controller for controlling said in-switching-communication-apparatus telephone directory memory and then carrying out a transmission reception control of a telephone directory data to and from a communication terminal having an in-terminal telephone directory memory for storing a telephone directory data, wherein a transmission of the telephone directory data stored in said in-switching-communication-apparatus telephone directory memory to said communication terminal enables said communication terminal to use the telephone directory data stored in said in-terminal telephone directory memory and the telephone directory data stored in said in-switching-communication-apparatus telephone directory memory.

4. The switching communication apparatus according to claim 3, **characterized in that** said switching communication apparatus includes: a telephone directory comparator for comparing the telephone directory data received when said communication terminal transmits the telephone directory data stored in said in-terminal telephone directory memory to said switching communication apparatus with the telephone directory data stored in said in-switching-communication-apparatus telephone directory memory; and a transmission telephone directory memory for storing a telephone directory data, which is judged to be not stored in said in-terminal telephone directory memory by said telephone directory comparator and which is judged to be stored in said in-switching-communication-apparatus telephone directory memory, wherein said central controller transmits the telephone directory data stored in said transmission telephone directory memory to said communication terminal.

5. The switching system comprising: a communication terminal having an in-terminal telephone directory memory for storing a telephone directory data and a terminal controller for controlling said in-terminal telephone directory memory and carrying out a transmission reception control of a telephone directory data to and from a switching communication apparatus; and the switching communication apparatus having an in-switching-communication-apparatus telephone directory memory for storing a telephone directory and a central controller for controlling said in-switching-communication-apparatus telephone directory memory and carrying out the transmission reception control of the telephone directory data to and from said communication terminal, **characterized in that** a transmission of the telephone directory data stored in said in-switching-communication-apparatus telephone directory memory to said communication terminal enables said communication terminal to use the telephone directory data stored in said in-terminal telephone directory memory and the telephone directory data stored in said in-switching-communication-apparatus telephone directory memory.

6. The switching system according to claim 5, **characterized in that** said switching communication apparatus includes: a telephone directory comparator for comparing the telephone directory data received when said terminal controller transmits the telephone directory data stored in said in-terminal telephone directory memory to said switching communication apparatus with the telephone directory data stored in said in-switching-communication-apparatus telephone directory memory; and a transmission telephone directory memory for storing a telephone directory data, which is judged to be not stored in said in-terminal telephone directory memory by said telephone directory comparator and which is judged to be stored in said in-switching-communication-apparatus telephone directory memory, **characterized in that** said central controller transmits the telephone directory data stored in said transmission telephone directory memory to said communication terminal.

7. The switching system according to claim 5 or 6, wherein said communication terminal includes an order controller for arraying the telephone directory data received from said switching communication apparatus and the telephone directory data stored in said in-terminal telephone directory memory at a predetermined order.

8. The switching system according to any one of claims 5 to 7, wherein said communication terminal is a mobile terminal.

9. The switching system according to any one of claims 5 to 8, wherein said switching communication apparatus is PBX.

10. The switching system according to any one of claims 5 to 8, wherein said switching communication apparatus is a server.

## Amended claims

### Amended claims under Art. 19.1 PCT

**1.** (Amended) A communication terminal comprising: an in-terminal telephone directory memory for storing a telephone directory data; and a terminal controller for controlling said in-terminal telephone directory memory and also carrying out a transmission reception control of a telephone directory data to and from said switching apparatus for carrying a transmission reception of a telephone directory data stored in an in-switching-communication-apparatus telephone directory memory, wherein a reception of the telephone directory data stored in said in-switching-communication-apparatus telephone directory memory enables the usage of the telephone directory data stored in said in-terminal telephone directory memory and the telephone directory data stored in said in-switching-communication-apparatus telephone directory memory, and wherein said communication terminal has an order controller for arraying the telephone directory data received from said switching communication apparatus and the telephone directory data stored in said in-terminal telephone directory memory at a predetermined order, and when said communication terminal carries out a process for treating a telephone directory, said terminal controller transmits the telephone directory data stored in said in-terminal telephone directory memory to a central controller of said switching communication apparatus.

**2.**

**3.**

**4.**

**5.** (Amended) A switching system comprising: a communication terminal having an in-terminal telephone directory memory for storing a telephone directory data and a terminal controller for controlling said in-terminal telephone directory memory and carrying out a transmission reception control of a telephone directory data to and from a switching communication apparatus; and the switching communication apparatus having an in-switching-communication-apparatus telephone directory memory for storing a telephone directory and a central controller for controlling said in-switching-communication-apparatus telephone directory memory and carrying out the transmission reception control of the telephone directory data to and from said communication terminal, **characterized in that** a transmission of the telephone directory data stored in said in-switching-communication-apparatus telephone directory memory to said communication terminal enables said communication terminal to use the telephone directory data stored in said in-terminal telephone directory memory and the telephone directory data stored in said in-switching-communication-apparatus telephone directory memory, wherein said communication terminal has an order controller for arraying the telephone directory data received from said switching communication apparatus and the telephone directory data stored in said in-terminal telephone directory memory at a predetermined order, and when said communication terminal carries out a process for treating a telephone directory, said terminal controller transmits the telephone directory data stored in said in-terminal telephone directory memory to a central controller of said switching communication apparatus.

**6.** (Amended) A switching system comprising: a communication terminal having an in-terminal telephone directory memory for storing a telephone directory data and a terminal controller for controlling said in-terminal telephone directory memory and carrying out a transmission reception control of a telephone directory data to and from a switching communication apparatus; and the switching communication apparatus having an in-switching-communication-apparatus telephone directory memory for storing a telephone directory and a central controller for controlling said in-switching-communication-apparatus telephone directory memory and carrying out the transmission reception control of the telephone directory data to and from said communication terminal, **characterized in that** a transmission of the telephone directory data stored in said in-switching-communication-apparatus telephone directory memory to said communication terminal enables said communication terminal to use the telephone directory data stored in said in-terminal telephone directory memory and the telephone directory data stored in said in-switching-communication-apparatus telephone directory memory, wherein said switching communication apparatus includes: a telephone directory comparator for comparing the telephone directory data received when said terminal controller transmits the telephone directory data stored in said in-terminal telephone directory memory to said switching communication apparatus with the telephone directory data stored in said in-switching-communication-apparatus telephone directory memory; and a transmission telephone directory memory for storing a telephone directory data, which is judged to be not stored in said in-terminal telephone directory memory by said telephone directory comparator and which is judged to be stored in said in-switching-communication-apparatus telephone directory memory, wherein said central controller transmits the telephone directory data stored in said transmission telephone directory memory to said communication terminal, and wherein said communication terminal has an order controller for arraying the telephone directory data received from said switching communication apparatus and the telephone directory data stored in said in-terminal telephone directory memory at a predetermined order, and when said communication terminal carries out a process for treating a telephone directory, said terminal controller transmits the telephone directory data stored in said in-terminal telephone directory memory to a central controller of said switching communication apparatus.

**7.**

**8.**

**9.** (Amended) The switching system according to claim 5, wherein said switching communication apparatus is PBX.

**10.** The switching system according to claim 5, wherein said switching communication apparatus is a CTI server.
